Europäisches Patentamt

European Patent Office

Office européen des brevets

(19)

(11) **EP 1 192 491 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.$^7$: **G02B 6/255**, G01M 11/00

(21) Anmeldenummer: **00954281.2**

(22) Anmeldetag: **16.06.2000**

(86) Internationale Anmeldenummer:
**PCT/DE2000/002008**

(87) Internationale Veröffentlichungsnummer:
**WO 2000/077550 (21.12.2000 Gazette 2000/51)**

(54) **BERECHNUNG DER SPLEISSDÄMPFUNG NACH MESSUNG DER GEOMETRIE**

CALCULATION OF THE ATTENUATION OF A SPLICE ACCORDING TO THE MEASUREMENT OF THE DIMENSIONS

DETERMINATION DE L'AMORTISSEMENT D'EPISSURE APRES MESURE DE LA GEOMETRIE

(84) Benannte Vertragsstaaten:
**FR GB IT**

(30) Priorität: **16.06.1999 DE 19927583**

(43) Veröffentlichungstag der Anmeldung:
**03.04.2002 Patentblatt 2002/14**

(73) Patentinhaber: **Corning Incorporated
Corning, New York 14831 (US)**

(72) Erfinder: **ZAMZOW, Bert
D-81371 München (DE)**

(74) Vertreter: **Kühn, Armin
Viering, Jentschura & Partner
Patent- und Rechtsanwälte
Steinsdorfstrasse 6
80538 München (DE)**

(56) Entgegenhaltungen:
**EP-A- 0 321 947       EP-A- 0 899 591
EP-A- 1 014 070       EP-B- 0 326 988
DE-A- 19 725 183      DE-C- 4 004 909**

**Beschreibung**

**1. Einleitung**

Durch das als "thermisches Spleißen" bezeichnete Verfahren lassen sich sowohl Monomode- als auch Mehrmoden-Glasfasern sowie Glasfaserbändchen stoffschlüssig, dämpfungsarm und dauerhaft miteinander verbinden. Da das Spleißen als häufig durchzuführender Arbeitsschritt die Kosten für den Aufbau eines Lichtwellenleiter-Kabelnetzes nicht unerheblich beeinflußt, wurden handliche und auch unter erschwerten Bedingungen vor Ort einsetzbare Geräte entwickelt, die alle für das Verschweißen der Glasfasern erforderlichen Schritte weitgehend vollautomatisch ausführen (siehe beispielsweise [1]). Die Dämpfung der mit einem solchen Gerät hergestellten Spleißverbindung hängt unter anderem von der exakten Ausrichtung der lichtführenden Faserkerne, der Qualität der Faserendflächen (Rauhigkeit, Bruchwinkel usw.) und der vom Bediener gewählten oder durch das jeweilige Steuerprogramm vorgegebenen Schweißparameter (Schweißzeit, Schweißstrom) ab.

**2. Stand der Technik**

Maßgebend für die Größe der Dämpfung des erzeugten Spleißes sind Störungen in der Geometrie des lichtführenden Faserkerns. Die insbesondere durch einen Kernversatz, eine Kernverbiegung oder eine Verbreiterung bzw. Verjüngung des Kerns hervorgerufene Dämpfung läßt sich beispielsweise mittels einer Transmissionsmessung unter Verwendung eines im Spleißgerät eingebauten Biegekopplers (LID-System) bestimmen. Hierbei wird Licht vor der Spleißstelle in die Glasfaser eingekoppelt und hinter der Spleißstelle wieder ausgekoppelt. Die Intensität des von der einen Glasfaser über den Spleiß in die andere Glasfaser transmittierten Lichtes ist dann ein Maß für die Dämpfung. Dieses Meßverfahren läßt sich allerdings nicht anwenden, wenn eine zu dicke oder dunkel eingefärbte Faserschutzschicht ("Coating") das Ein- und Auskoppeln von Licht in den bzw. aus dem Faserkern verhindert.

Das aus [2] bekannte Verfahren zur Bestimmung der Spleißdämpfung beruht auf der optischen Erfassung des Kernversatzes, der Schiefstellung der Faserkerne und der Kernverbiegung im Bereich der Spleißstelle. Eine empirisch ermittelte Formel beschreibt die funktionale Abhängigkeit der Dämpfung von den genannten Parametern. Da das Verfahren keine Ein- und Auskopplung von Licht in den Faserkern erfordert, ist es unabhängig von der Lichtdurchlässigkeit der Faserschutzschicht immer anwendbar. Es liefert allerdings nur dann zuverlässige Dämpfungswerte, wenn allein die vorgenannten Parameter die Dämpfung des Spleißes bestimmen. Dies ist jedoch insbesondere bei falsch eingestellten Schweißparametern oder großen Dämpfungen nicht der Fall.

**3. Gegenstand, Ziele und Vorteile der Erfindung**

Gegenstand der Erfindung ist ein Verfahren zur Bestimmung der Dämpfung eines zwei optische Wellenleiter verbindenden Spleißes. Der Begriff "Spleiß" bezeichnet hierbei jede stoffschlüssige, insbesondere durch thermisches Verschmelzen/Verschweißen hergestellte Verbindung zwischen mindestens zwei lichtführenden Strukturen oder Elementen, also insbesondere die Verbindung zwischen Glasfasern, Glasfaserbändchen/-bündeln oder die Verbindung zwischen einer Glasfaser bzw. eines Glasfaserbändchens mit einem aktiven oder passiven optischen Bauelement.

Das Verfahren soll es dem Anwender ermöglichen, die Dämpfung des erzeugten Spleißes unter Berücksichtigung aller, die Dämpfung wesentlich beeinflussender Parameter mit hoher Genauigkeit zu bestimmen. Diese Aufgabe wird durch ein Verfahren mit den in Patentanspruch 1 angegebenen Merkmalen gelöst.

Die abhängigen Ansprüche betreffen vorteilhafte Ausgestaltungen und Weiterbildungen des Verfahrens.

Das vorgeschlagene Verfahren läßt sich ohne weiteres in einem modernen Spleißgerät anwenden, da man nur dessen Software entsprechend anpassen muß. Es zeichnet sich weiterhin durch folgende Eigenschaften aus:

- die erreichbare Genauigkeit der Dämpfungsbestimmung wird im wesentlichen nur durch die Qualität des der Sichtbarmachung des Faserkerns dienenden optischen Systems und der Leistungsfähigkeit des die Feldberechnung ausführenden Prozessors begrenzt;
- die Dämpfung des Spleißes kann richtungsabhängig bestimmt werden;
- vergleichsweise dicke und/oder dunkel eingefärbte Faserschutzschichten können die Messung nicht beeinträchtigen;
- die Spleißdämpfung läßt sich für beliebige Betriebswellenlängen berechnen und
- das Verfahren erlaubt eine einfache Anpassung an die jeweiligen Erfordernisse (z.B. hohe Genauigkeit, schnelle Messung).

## 4. Zeichnungen

Die Erfindung wird im folgenden anhand von Zeichnungen näher erläutert. Es zeigen:

Figur 1   den schematischen Aufbau eines modernen, weitgehend vollautomatisch arbeitenden thermischen Spleißgerätes;

Figur 2   die relative Lage der Enden zweier zu verbindender optischer Fasern;

a) nach der Annäherung und Grobpositionierung;
b) nach der Ausrichtung bezüglich ihrer Außenkonturen und
c) nach der Ausrichtung bezüglich ihrer lichtführenden Faserkerne;

Figur 3   den schematischen Aufbau einer Glasfaser sowie das Profil n(r) der Brechzahl in der senkrecht zur Faserlängsachse orientierten Ebene;

Figur 4   die bei transversaler Durchleuchtung einer Glasfaser mittels einer Abbildungsoptik in der Sensorebene einer CCD-Kamera erzeugte Intensitätsverteilung ("Schattenbild" der Glasfaser);

Figur 5   das Schattenbild der Glasfaser, deren Kern im Bereich des Spleißes einen lateralen Versatz aufweist;

Figur 6   das Schattenbild einer Glasfaser, deren Kern im Bereich des Spleißes gebogen ist;

Figur 7   das Schattenbild einer Glasfaser, deren Kern im Bereich des Spleißes aufgeweitet/gestaucht ist;

Figur 8   das Schattenbild einer Glasfaser, bei der das den Kern definierende Linienpaar aufgrund der Diffusion der Dotierstoffatome im Bereich des Spleißes eine geringere Helligkeit bzw. einen geringeren Kontrast aufweist als außerhalb der Erwärmungszone;

Figur 9   die Unterteilung des dem Verfahren der Feldberechnung zugrundeliegenden, den Faserkern enthaltenden Raumes in Quader und Schichten.

## 5. Beschreibung der Ausführungsbeispiele

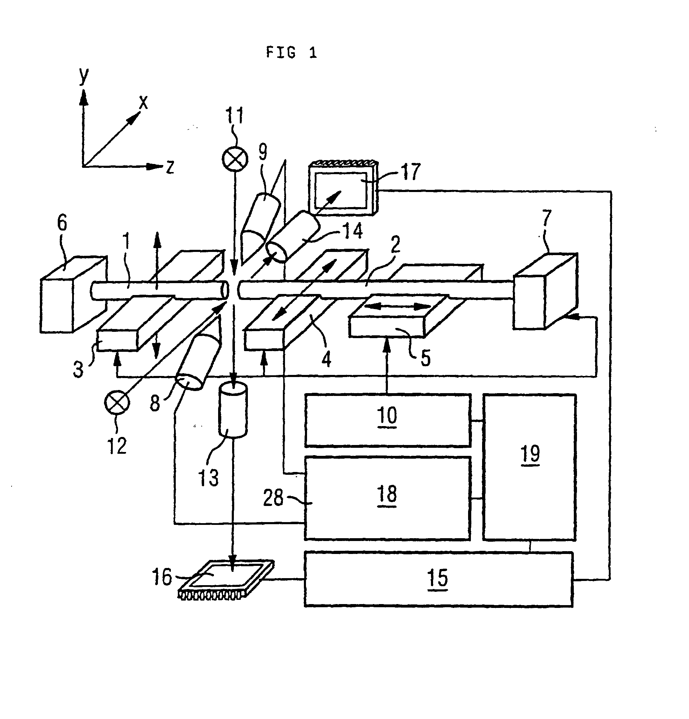

Das in Figur 1 nur schematisch dargestellte Spleißgerät erlaubt das weitgehend vollautomatische Verschweißen optischer Fasern. Die mit Hilfe eines zwischen zwei Elektroden gezündeten Lichtbogens (elektrische Glimmentladung) erzeugte, im folgenden kurz als "Spleiß" bezeichnete stoffschlüssige Verbindung der optischen Fasern ist frei von Einschlüssen, wobei die durch den Spleiß hervorgerufene Dämpfung im Mittel etwa L = 0,02 - 0,03 dB (identische Standard-Monomode-Glasfasern) beträgt.

Das Verbinden der jeweils aus einem Kern (Brechzahl $n_{Kern}$), einem Mantel (Brechzahl $n_{Mantel} < n_{Kern}$) und einer, ein- oder mehrschichtigen Umhüllung ("Coating") bestehenden Einmodenoder Mehrmoden-Glasfasern geschieht üblicher Weise durch das Ausführen der folgenden Verfahrensschritte:

a) Präparieren der Faserenden 1/2, d.h. sorgfältiges Entfernen der Faserumhüllungen, Reinigung der Faserenden 1/2 und Brechen der Fasern derart, daß die Faserendflächen annähernd senkrecht zur Faserlängsachse orientiert sind (Bruchwinkel < 0,8°; typischerweise 0,5°);

b) Fixieren der Faserenden 1/2 in den Halterungen des Spleißgeräts;

c) Annähern und Ausrichten der Faserenden 1/2 mittels hochpräziser Positioniereinheiten 3/4/5 unter Verwendung des LID-Systems 6/7 (Local Injection and Detection) und/oder durch Videobildauswertung;

d) Reinigen der Faserendflächen durch kurzzeitiges Erhitzen der Faserenden 1/2;

e) Vorschub und Verschmelzen der Faserenden 1/2 durch Zünden eines elektrischen Lichtbogens zwischen zwei im Bereich der Faserenden 1/2 angeordneten Elektroden 8/9 und

f) Überprüfen der Qualität des Spleißes (Messung der Spleißdämpfung, Überprüfung der Zugfestigkeit).

Während die Verfahrensschritte a) und b) vom Bediener, also noch manuell ausgeführt werden müssen, laufen die unter c) bis f) angegebenen und weitere in [1] erwähnte Verfahrensschritte, insbesondere die Bestimmung des Bruchwinkels, der Qualität und des Verschmutzungsgrades der Faserendflächen im Spleißgerät programmgesteuert ab.

Zur Durchführung dieser Verfahrensschritte ist das Spleißgerät mit folgenden Komponenten und Elementen ausgestattet:

- drei Positioniereinheiten 3/4/5 zur unabhängigen Verschiebung der jeweils in V-Nuten geführten Faserenden 1/2 in drei orthogonalen Raumrichtungen (x-, y- und z-Achse ≅ Faserlängsachse),
- eine die Stellelemente (Stellmotoren, pizoelektrische Aktuatoren) der Positioniereinheiten 3/4/5 ansteuernde Kontrolleinheit 10,

- einer aus einem optischen Sender 6 (Leuchtdiode, Biegekoppler) und einem optischen Empfänger 7 (Biegekoppler, Fotodiode, Verstärker) bestehenden Transmissionsmeßeinrichtung (LID-System, siehe beispielsweise [1]),
- zwei optischen Systemen zur Projektion der Außenkonturen bzw. des Profils der beiden Faserenden 1/2 in zwei orthogonal zueinander orientierte Ebenen (x/z- bzw. y/z-Ebene), wobei die optischen Systeme jeweils eine Lichtquelle 11/12 (Leuchtdiode), eine Abbildungsoptik 13/14 und eine mit der Videoauswerteeinheit 15 verbundene die x/z- bzw. die y/z-Sensorebene definierende CCD-Kamera 16/17 aufweisen,
- einer Wärmequelle zum Erhitzen der Faserenden 1/2 auf die im Bereich zwischen etwa 1600 - 2000 °C liegende Schmelztemperatur, wobei die Wärmezufuhr im gezeigten Ausführungsbeispiel mittels einer zwischen zwei Elektroden 8/9 erzeugten und durch die Einheit 18 gesteuerte Glimmentladung erfolgt,
- eine eingangsseitig mit der Video-Auswerteeinheit 15 verbundene zentrale Steuerung 19, welche alle für das Spleißen notwendigen Schritte entsprechend dem gewählten Programm ausführt und überwacht sowie
- einen LCD-Monitor (nicht dargestellt).

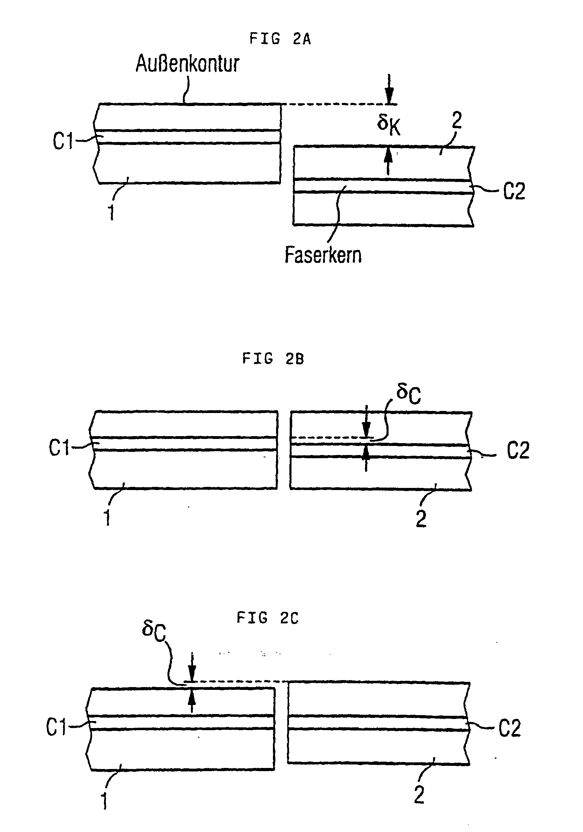

Nach dem Einlegen der Glasfasern in die Halterung des Spleißgeräts stehen sich deren Enden 1/2 im allgemeinen nicht ausgerichtet gegenüber. Wie in Figur 2 schematisch in Seitenansicht dargestellt, weisen dann sowohl die Außenkonturen der Faserenden 1/2 als auch die Faserkerne C1/C2 einen nicht notwendigerweise gleich großen transversalen Versatz $\delta_K$ bzw. $\delta_C$ auf. Durch Auswertung der mit Hilfe der beiden CCD-Kameras 16/17 aufgenommenen Projektionen der Faserenden 1/2 in der x/z-Ebene bzw. der y/z-Ebene wird nun der Versatz $\delta_K$ der Außenkonturen gemessen. Anschließend verschiebt man die Faserenden 1/2 mit Hilfe der von der Kontrolleinheit 10 angesteuerten Positioniereinheiten 3/4/5 in transversaler Richtung, d.h. in Richtung der x- und y-Achse solange, bis die Außenkonturen der Faserenden 1/2 fluchten, deren transversaler Versatz $\delta_K$ also sowohl in x- als auch in y-Richtung zumindest näherungsweise verschwindet ($\delta_{KX} \approx \delta_{KY} \approx 0$). Nach dieser als Feinpositionierung bezeichneten Ausrichtung liegen sich die Faserenden 1/2, wie in Figur 2b dargestellt, gegenüber. Deutlich zu erkennen ist der noch vorhandene, durch die exzentrische Lage der Faserkerne C1/C2 hervorgerufene Kernversatz $\delta_C$.

Um einen Spleiß mit möglichst niedriger Dämpfung zu erzeugen, müssen die Faserenden 1/2 daher noch hinsichtlich ihrer Kerne C1/C2 ausgerichtet, also der Kernversatz $\delta_C$ beseitigt oder zumindest minimiert werden. Dies geschieht unter Einsatz des LID-Systems, welches die von einer Leuchtdiode des Senders 6 emittierte IR-Strahlung der Wellenlänge 800 nm ≤ λ ≤ 1600 nm, insbesondere λ = 1300 nm oder λ = 1550 nm, über den zugeordneten Biegekoppler in die linke Glasfaser einspeist und die Intensität der vom linken Faserende 1 in das rechte Faserende 2 eingekoppelten Strahlung mittels der aus einem zweiten Biegekoppler und einer Fotodioden-Verstärkereinheit bestehenden optischen Empfänger mißt. Die Faserenden 1/2 werden hierbei solange in transversaler Richtung verschoben, bis die im optischen Empfänger 7 des LID-Systems gemessene Strahlungsintensität ein Maximum erreicht, die Faserenden 1/2 somit die in Figur 2c dargestellte Position einnehmen (fluchtende und parallel zur z-Achse ausgerichtete Faserkerne C1/C2; kleiner, dem korrigierten Kernversatz $\delta_c$ entsprechender Konturversatz).

Anschließend werden die Faserenden 1/2 durch Zünden des elektrischen Lichtbogens zwischen den Elektroden 8/9 aufgeheizt, einander angenähert und miteinander verschmolzen. Während dieses Vorgangs mißt das LID-System 6/7 laufend den Lichtdurchgang über die Spleißstelle. Erreicht die im optischen Empfänger 7 gemessene Intensität ein Maximum, ist die optimale Schweißdauer erreicht und der Schweißvorgang wird automatisch beendet. Durch Anwendung dieser als Automatic-Fusion-Time-Control bezeichneten Technik lassen sich die durch den Zustand der Elektroden 8/9 (nicht optimaler Abstand, Verschleiß usw.) und/oder durch Umwelteinflüsse (Feuchtigkeit, Luftdruck, Temperatur) hervorgerufenen, zu einer erhöhten Spleißdämpfung führenden Effekte weitgehend kompensieren.

Trotz aller sorgfalt und Präzision während des Präparierens, Ausrichtens und Annäherns der Glasfasern 1/2 lassen sich ein Restversatz der Faserkerne C1/C2, eine Schiefstellung der Faserlängsachsen und/oder der Faserendflächen sowie ein Überhub (die angeschmolzenen Faserenden werden über das zulässige Maß hinaus einander angenähert und ineinander geschoben) in der Regel nicht vollständig vermeiden. Je nach Ausmaß/Größe dieser "Fehlstellungen" weicht die Geometrie des Faserkerns C1/C2 im Bereich des erzeugten Spleißes demzufolge mehr oder weniger Stark von derjenigen der ungestörten Faser ab. Da im wesentlichen nur der Faserkern das Licht transportiert, sind hauptsächlich Störungen der Kerngeometrie im Bereich des Spleißes für die Erhöhung der Dämpfung verantwortlich. Verfahren zur Bestimmung der Qualität eines Spleißes können somit nur dann hochpräzise Ergebnisse liefern, wenn die Kerngeometrie, d.h. die das Dämpfungsverhalten bestimmende räumliche Verteilung der Brechzahl $n(\vec{r})$ an der Spleißstelle in die Berechnung der Dämpfung eingeht.

Beim vorgeschlagenen Verfahren wird die Spleißgeometrie mittels der im Spleißgerät vorhandenen optischen Systeme 11 - 17 dreidimensional erfaßt und daraus die den Spleiß und seine Eigenschaften (also auch die Dämpfung) exakt beschreibende räumliche Verteilung $n(\vec{r})$ der Brechzahl abgeleitet. Im Einzelnen erfordert die Bestimmung der Spleißdämpfung die Ausführung folgender, unten näher erläuterter Schritte:

- dreidimensionale Erfassung der Spleißgeometrie und Berechnung der räumlichen Verteilung $n(\vec{r})$ der Brechzahl;
- Festlegung der Feldverteilung ("Anfangsfeldverteilung" $\vec{E}(z_0)$) einer in der Glasfaser ausbreitungsfähigen Mode (entspricht beispielsweise dem Grundmodus $LP_{01}$ in einer sogenannten Monomode-Glasfaser) innerhalb eines in Strahlrichtung vor/hinter dem Spleiß liegenden Raumbereichs;

- Berechnung der Feldverteilung ("Endfeldverteilung" $\vec{E}(z_n)$) dieser Mode innerhalb eines in Strahlrichtung hinter dem Spleiß liegenden Raumbereichs und

- Berechnung der Dämpfung des Spleißes aus den den beiden Feldverteilungen zugeordneten Intensitätswerten.

Dreidimensionale Erfassung der Spleißgeometrie

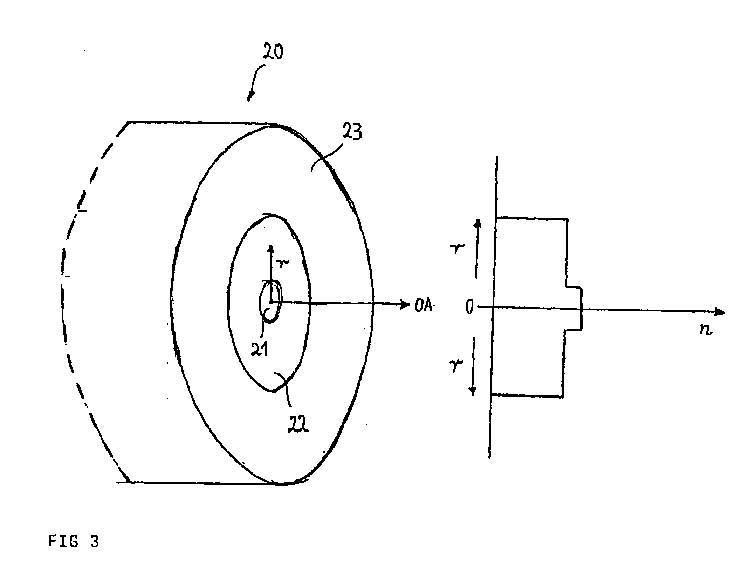

Eine dem Transport elektromagnetischer Strahlung dienende, in Figur 3 mit 20 bezeichnete Glasfaser besteht beispielsweise aus einem Ge-dotierten $SiO_2$-Kern 21 ($n_{Kern}$ = 1,48), einem den Kern 21 konzentrisch umhüllenden, auch als "Cladding" bezeichneten $SiO_2$-Mantel 22 ($n_{Mantel}$ = 1,46) und einen Kern 21 und Mantel 22 vor äußeren mechanischen, thermischen und chemischen Einwirkungen schützenden, üblicherweise farbig ausgeführten und ggf. noch mit einer Ringmarkierung versehenen Kunststoffhülle 23 ("Coating"). Bei einer Monomode-Glasfaser 20 beträgt der Kernglasdurchmesser typischerweise $\phi_{Kern}$ = 9 µm, der Mantelglasdurchmesser typischerweise $\phi_{Mantel}$ = 125 µm.

Da die Konzentration des Dotierstoffs in der Glasfaser 20 auf der Faserlängsachse OA einen konstanten Wert besitzt und in der dazu orthogonalen Ebene beispielsweise das im rechten Teil der Figur 3 dargestellte Profil aufweist, ist auch die räumliche Verteilung der Brechzahl $n(\vec{r})$ radialsymmetrisch bezüglich der Faserlängsachse OA ($n(\vec{r})$ = n(r, z=z_0)). Aufgrund der schon erwähnten Effekte (Versatz der Faserkerne, Schiefstellung der Faserendflächen usw. vor dem Verspleißen) weicht die räumliche Verteilung der Brechzahl $n(\vec{r})$ im Bereich des Spleißes unter Umständen deutlich von der Brechzahlverteilung $n_0(\vec{r})$ der ungestörten Glasfaser ab. Wie bereits erläutert, ist im wesentlichen nur die Verformung des lichtführenden Bereiches, also des Faserkerns 21 für den Intensitätsverlust an der Spleißstelle verantwortlich. Für die Berechnung der Dämpfung reicht daher die Kenntnis der räumlichen Verteilung $n(\vec{r})$ der Brechzahl innerhalb eines den Kern 21 enthaltenden und sich beispielsweise nur 20 - 40µm in transversaler Richtung (x/y-Ebene) erstreckenden Volumens aus.

Aufnahme von Bildern des Spleißes

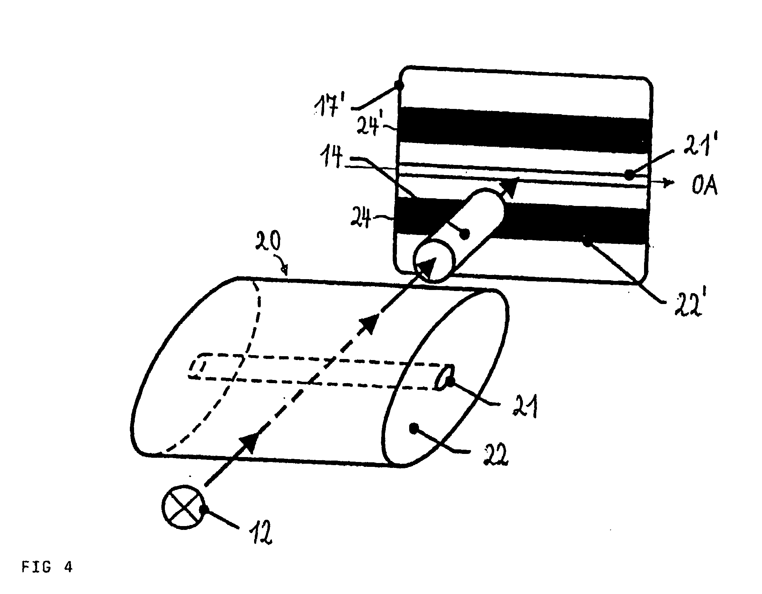

Figur 4 zeigt die von der Abbildungsoptik 14 auf der die x/z-Ebene definierende Sensorfläche 17' der CCD-Kamera 17 erzeugte Intensitätsverteilung, wenn man eine ihrer Schutzschicht 22 entkleidete Glasfaser 20 durch Aktivieren der Lichtquelle 12 in transversaler Richtung (x-Richtung) durchleuchtet. Deutlich zu erkennen sind die Außenkonturen 22' (äußerer Rand des Fasermantels 22) der Glasfaser 20, die beiden durch den Zylinderlinseneffekt hervorgerufenen Dunkelzonen 24/24' und das Bild des Faserkerns 21 (Linienpaar 21'). Ein entsprechendes Schattenbild erzeugt das aus der Lichtquelle 11 und der Abbildungsoptik 13 bestehende System auf der die x/z-Ebene definierenden Sensorfläche der CCD-Kamera 16. Über die Videoauswerteeinheit 15 werden die beiden Intensitätsverteilungen der mit einem leistungsfähigen Mikroprozessor ausgestatteten Steuerung 19 zugeführt und dort in digitaler Form abgespeichert.

Direkte Berechnung der Verteilung $n(\vec{r})$ der Brechzahl aus dem Bild des Spleißes

Besitzen die optischen Systeme des Spleißgeräts eine ausreichend hohe Auflösung, kann man die räumliche Verteilung der Brechzahl $n(\vec{r})$ aus den aufgenommenen Bildern, beispielsweise mit Hilfe der in [3] beschriebenen Verfahren, direkt berechnen. Hierbei werden keine zusätzlichen Informationen benötigt, noch muß die Verteilung der Brechzahl in irgend einer Weise standardisiert sein. Von Nachteil ist allerdings die erforderliche, hohen Ansprüchen genügende und damit vergleichsweise teure Abbildungsoptik und der bei einigen Verfahren zusätzlich notwendige Aufwand zur Erzeugung von Interferenzaufnahmen.

Ableitung der Verteilung der Brechzahl $n(\vec{r})$ aus einer Basisverteilung $n_0(\vec{r})$

Um die räumliche Verteilung der Brechzahl $n(\vec{r})$ im Bereich des Spleißes zu bestimmen, wird eine sogenannte Basisverteilung $n_0(\vec{r})$ der Brechzahl mittels geeigneter, aus den aufgenommenen Bildern des Spleißes gewonnener Parameter modifiziert. Als Basisverteilung $n_0(\vec{r})$ dient insbesondere die räumliche Verteilung der Brechzahl in der ungestörten Glasfaser. Letztere ist bei Verwendung bestimmter Typen von Glasfasern (Standardfaser, dispersionsverschobene Faser, erbiumdotierte Faser usw.) bekannt oder läßt sich dem Datenblatt entnehmen bzw. beim Hersteller erfragen. Stehen entsprechende Informationen nicht zur Verfügung, läßt sich die Verteilung $n_0(\vec{r})$ der Brechzahl der ungestörten Faser beispielsweise mittels der in [4] beschrieben Verfahren experimentell bestimmen.

In der Praxis ist es von Vorteil, die als Basisverteilung $n_0(\vec{r})$ dienende räumliche Verteilung der Brechzahl der ungestörten Faser für die verschiedenen, häufiger eingesetzten Fasertypen vorab zu ermitteln und im Spleißgerät, ggf. in parametrischer Form abzuspeichern. Da die in der Nachrichtenübertragung verwendeten Glasfasern meist in Richtung ihrer Längsachse OA homogen und rotationssymmetrisch bezüglich dieser Achse OA aufgebaut sind, besitzt auch die Verteilung der Brechzahl eine entsprechende Symmetrie, d.h. das sogenannte Brechzahlprofil $n(r, z_0)$ (r: lateraler Abstand von der Faserlängsachse OA) beschreibt die Verteilung der Brechzahl vollständig.

Die folgenden Beispiele erläutern die notwendigen Schritte zur Bestimmung der in die Berechnung der Dämpfung eingehenden Verteilung $n(\vec{r})$ im Bereich des Spleißes durch Modifikation einer Basisverteilung $n_0(r)$. Die dämpfungserhöhend wirkenden, in der Praxis meist gleichzeitig auftretenden Effekte und Mechanismen werden der Übersichtlichkeit halber getrennt dargestellt. Die für eine Wellenlänge λ1 ermittelte Verteilung $n_{\lambda 1}(\vec{r})$ der Brechzahl läßt sich hierbei mit Hilfe der sogenannten Sellmaier-Reihe (Siehe beispielsweise [5]) in die entsprechende Verteilung $n_{\lambda 2}(\vec{r})$ bei einer anderen Wellenlänge λ2 umrechnen.

Versatz der Faserkerne

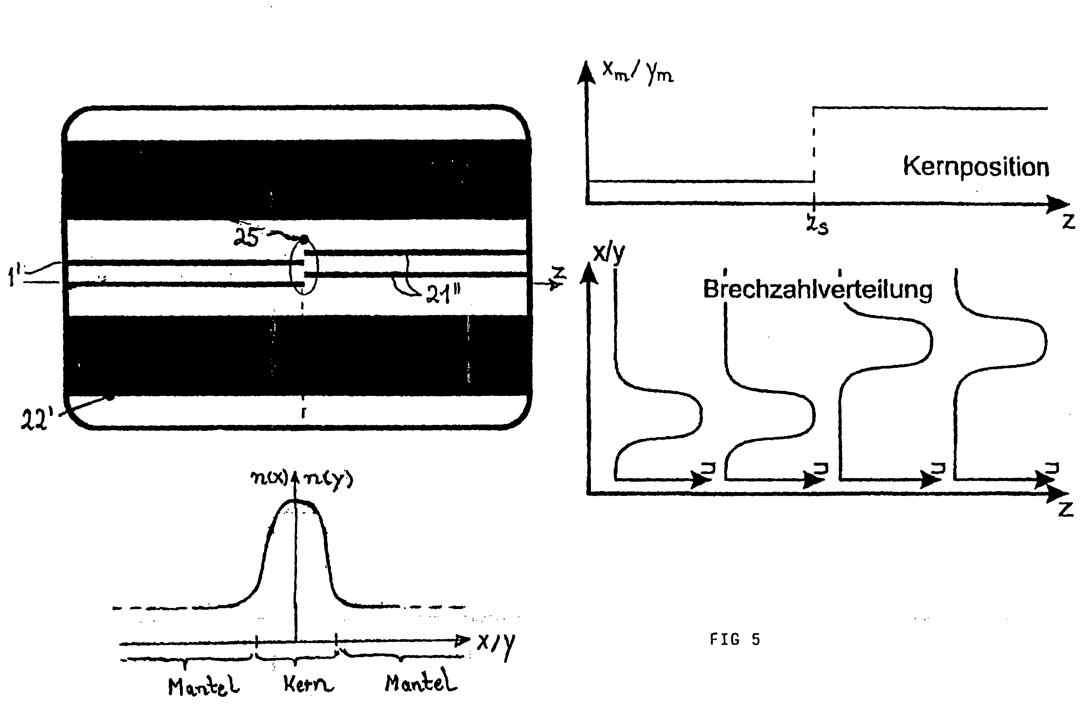

Im Idealzustand besitzen Kern und Mantel der beiden miteinander verbundenen Glasfasern auch im Bereich des Spleißes dieselbe, mit der z-Achse zusammenfallende Symmetrieachsen. Aufgrund einer Fehlpositionierung zumindest einer der beiden Glasfasern vor der Verschmelzung (nicht fluchtende Ausrichtung) kommt es aber zu einem die Lichtausbreitung störenden, dämpfungserhöhend wirkenden Kernversatz im Bereich der Spleißstelle 25 (siehe Fig. 5). In den von den Abbildungsoptiken 13/14 auf den Sensorflächen der CCD-Kameras 16/17 jeweils erzeugten Intensitätsverteilungen der Spleißstelle beobachtet man daher einen dem Versatz proportionale laterale Verschiebung der die jeweiligen Kerne repräsentierenden Linienpaare 21'/21" bezüglich der z-Achse, wobei die den lateralen Abstand $x_m/y_m$ der Kernmittelpunkte von der z-Achse beschreibende Kurve den im rechten oberen Teil der Figur 5 schematisch dargestellten stufenförmigen Verlauf zeigt.

Besitzt die räumliche Verteilung $n_0(\vec{r})$ der Brechzahl der ungestörten Glasfaser (Basisverteilung) in transversaler Richtung beispielsweise ein im unteren Teil der Figur 4 dargestelltes Stufenprofil, berechnet sich daraus die gesuchte, die den realen Verhältnissen nahekommende Brechzahlverteilung $n(\vec{r})$, indem man die Basisverteilung $n_0(\vec{r})$ gemäß Gleichung (1) modifiziert.

$$n(r,z) = n_0(r' + \Delta r, z) \tag{1}$$

$$\Delta r^2 = x_m{}^2(z) + y_m{}^2(z)$$

$x_m$: laterale Verschiebung des Kernmittelpunkts in der x/z-Ebene
$y_m$: laterale Verschiebung des Kernmittelpunkts in der y/z-Ebene

Auf der z-Achse ändert sich somit das Brechzahlprofil entsprechend dem rechten unteren Teil der Figur 5.

Um die lateralen Abstände $x_m(z)/y_m(z)$ des Fasermittelpunktes von der im Schattenbild eingezeichneten z-Achse mit großer Genauigkeit aus den Bildern zu extrahieren, wird der Versatz des den Faserkern 21 repräsentierenden Linienpaares 21'/21" bezüglich einer vorzugsweise am linken oder rechten Bildrand liegenden Referenzposition gemessen. Hierbei kann beispielsweise das in [6] beschriebene Korrelationsverfahren zur Anwendung kommen.

Falls das optische System des Spleißgerätes keine Abbildungen/Sichtbarmachung des Faserkerns 21 erlaubt, kann in erster Näherung angenommen werden, daß der Kern 21 seine Lage relativ zur Außenkontur der Faser während des Verschmelzens nicht signifikant ändert. Der laterale Abstand der Kernmitte zu der im Schattenbild eingezeichneten z-Achse entspricht dann näherungsweise dem lateralen Abstand des Mittelpunktes der Faseraußenkontur 22' von dieser Achse.

Verbiegung des Faserkerns

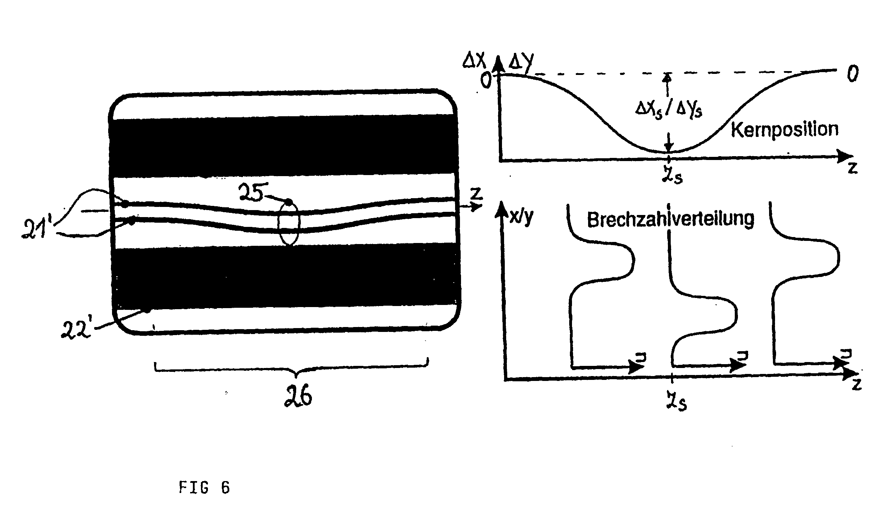

Zu einer Verbiegung des Faserkerns im Bereich des Spleißes kommt es beispielsweise aufgrund der exzentrischen Lage zumindest eines der beiden Kerne innerhalb der jeweiligen Glasfaser und/oder der Nichtparallelität der sich gegenüberstehenden Faserendflächen vor der Verschmelzung. Die beiden Abbildungsoptiken 13/14 des Spleißgerätes erzeugen dann jeweils ein im linken Teil der Figur 6 schematisch dargestelltes Schattenbild des Spleißes. Außerhalb der Erwärmungszone 26 soll der Mittelpunkt des Faserkerns im folgenden auf der z-Achse liegen, in der Mitte 25 des Spleißes hingegen um $\Delta x(z_s)$ bzw. $\Delta y(z_s)$ in lateraler Richtung versetzt sein. Auf der z-Achse ändert sich der laterale Abstand $\Delta x(z)/\Delta y(z)$ der Kernmitte daher gemäß der im rechten oberen Teil der Figur 6 dargestellten Funktion, welche in der Mitte 25 des Spleißes (Koordinate $z_s$) ein Minimum durchläuft.

Um die den realen Verhältnissen angenäherte räumliche Verteilung der Brechzahl im Bereich des Spleißes zu erhalten, wird die Basisverteilung $n_0(r)$ entsprechend dem gemessenen lateralen Abstand $\Delta x(z)/\Delta y(z)$ der Kernmitte von der z-Achse in lateraler Richtung verschoben. Der rechte untere Teil der Figur 6 zeigt die verschiedenen z- Werten zugeordneten Profile n(r,z) der Brechzahl.

Querschnittsänderung des Faserkerns

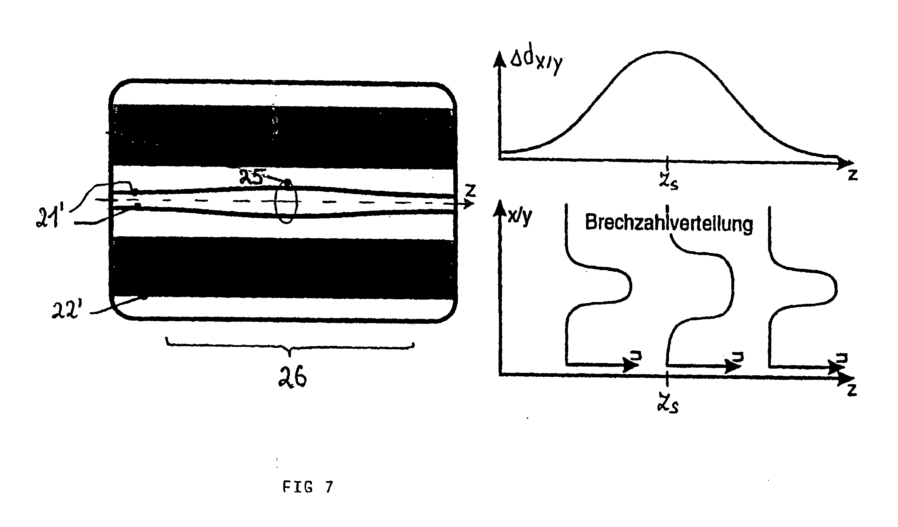

Falls die beiden zu verbindenden Glasfasern während des Spleißvorgangs gestaucht oder auseinandergezogen werden, kommt es zu einer die Dämpfung beeinflussenden Aufweitung bzw. Verjüngung des Faserkerns und der Außenkontur im Bereich des Spleißes. Im erzeugten Schattenbild des Spleißes (Siehe Figur 7) weisen dann die den Faserkern vom Fasermantel abgrenzenden, außerhalb der Spleißstelle annähernd parallel zur z-Achse verlaufenden Linien 21' einen gegenüber den am Bildrand liegenden, ungestörten Bereichen vergrößerten/verminderten Abstand voneinander auf. Der rechte obere Teil der Figur 7 zeigt die funktionale Abhängigkeit der Verbreiterung $\Delta d_{x/y}$ des Kerndurchmessers entlang der z-Achse. In der Mitte 25 des Spleißes ist die Breite $d_{x/y}(z_s)$ des Kerns maximal. Das durch

$$V_{x/y}(z) := [d_{x/y}(z)]/[d_{x/y}(z_0)] \qquad (2)$$

$d_{x/y}(z)$ : Abstand des Linienpaares 21' an einer Stelle z im Bereich des Spleißes

$d_{x/y}(z_0)$: Abstand des Linienpaares 21' an einer Stelle $z_0$ außerhalb der Erwärmungszone

gegebene Verhältnis $V_{x/y}(z)$ definiert somit ein Maß für die Querschnittsänderung des Faserkerns.
Um die Verteilung der Brechzahl an der Spleißstelle zu erhalten, wird die Basisverteilung $n_0(r)$ entsprechend dem Verhältnis $V_{x/y}(z)$ in der x/y-Ebene gestaucht oder gestreckt, so daß man beispielsweise das im rechten unteren Teil der Figur 7 schematisch dargestellte Brechzahlprofil an verschiedenen Stellen der z-Achse erhält.
Steht kein hochwertiges Abbildungssystem zur Verfügung (Kern nicht sichtbar im Schattenbild) läßt sich die Querschnittsänderung des Faserkerns zumindest näherungsweise mit der Querschnittsänderung der Außenkontur (in Figur 7 nicht dargestellt) gleichsetzen. Es genügt somit die Vermessung der Faseraußenkonturen 22' im jeweiligen Schattenbild, um den auf die Basisverteilung anwendbaren Stauchungs- bzw. Dehnungsfaktor $V_{x/y}(z)$ zu bestimmen.

Diffusion des Dotierstoffs im Bereich des Spleißes

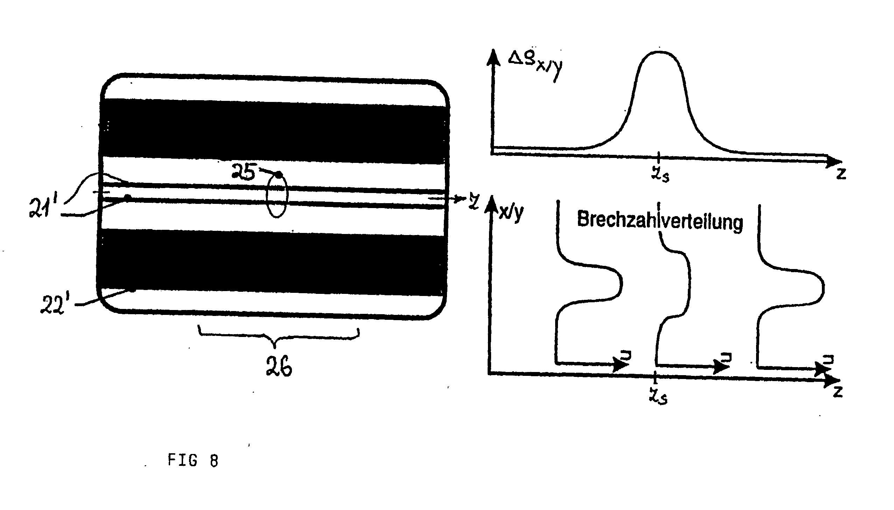

Während des Erwärmens der Glasfasern im Lichtbogen, beginnen die für die unterschiedliche Brechzahl von Kern und Mantel verantwortliche Dotierstoff in der durch den Gradienten der Konzentration vorgegebenen Richtung, also vorwiegend in lateraler Richtung nach außen in den Mantel zu wandern. Dieser Vorgang führt zu einer die Dämpfung beeinflussenden Änderung des Brechzahlprofils.
Da die Konzentration des Dotierstoffes an der Grenze Kern/Mantel als Folge der Diffusion abnimmt, verringert sich an der Spleißstelle der Bildkontrast, d.h. das den Faserkern repräsentierende Linienpaar 21' erscheint im erzeugten Schattenbild, insbesondere in der Mitte 25 des Spleißes, weniger dunkel als beispielsweise außerhalb der Erwärmungszone 26 (Siehe Figur 8). Die durch Diffusion hervorgerufene Änderung $\Delta\rho_{x/y}$ der Dotierstoffkonzentration auf der z-Achse folgt hierbei näherungsweise der im rechten oberen Teil der Figur 8 dargestellten Glockenkurve.
Um die Verteilung der Brechzahl n(r,z) am Spleiß zu erhalten, wird die Basisverteilung $n_0(r,z_0)$ mit einem vom Verhältnis

$$K_{x/y}(z) := H_{x/y}(z)/H_{x/y}(z_0) \qquad (3)$$

$H_{x/y}(z)$ : Helligkeit/Intensität der Kerngrenze an einer Stelle z im Bereich des Spleißes

$H_{x/y}(z_0)$: Helligkeit/Intensität der Kerngrenze an einer Stelle $z_0$ außerhalb der Erwärmungszone

abhängigen Parameter $S_{x/y}(z) = f(K_{x/y}(z))$ in lateraler Richtung gestaucht oder gestreckt, so daß die gesuchte Verteilung n(r) das im rechten unteren Teil der Figur 8 dargestellte Profil auf der z-Achse aufweist. Als Parameter $S_{x/y}(z)$ kann näherungsweise auch das Verhältnis $K_{x/y}(z)$ dienen.
Ist der Kern in den Schattenbildern nicht zu erkennen (einfaches optisches System) läßt sich durch Messung der Spleißtemperatur (z.B. direkt oder indirekt über die Helligkeit der erhitzten Faser) oder aus der am Spleißgerät eingestellten Erwärmungstemperatur auf die Stärke der Diffusion und damit auf den Streckungs-/Stauchungsfaktor rückschließen.

Festlegung der Anfangsfeldverteilung

Die in die Berechnung der Spleißdämpfung eingehende Anfangsfeldverteilung $\vec{E}_0(\vec{r})$ entspricht der aus der Basisverteilung $n_0(\vec{r})$ der Brechzahl für eine gegebene Wellenlänge und den zugeordneten Raumbereich abgeleitete Ortsabhängigkeit des elektrischen Feldes einer in der Glasfaser ausbreitungsfähigen Mode (z.B. Grundmode $LP_{01}$ einer Monomode-Glasfaser). Verfahren zur Berechnung der Feldverteilung aus einer vorgegebenen räumlichen Verteilung der Brechzahl sind beispielsweise aus [7,8] bekannt.

Berechnung der Endfeldverteilung

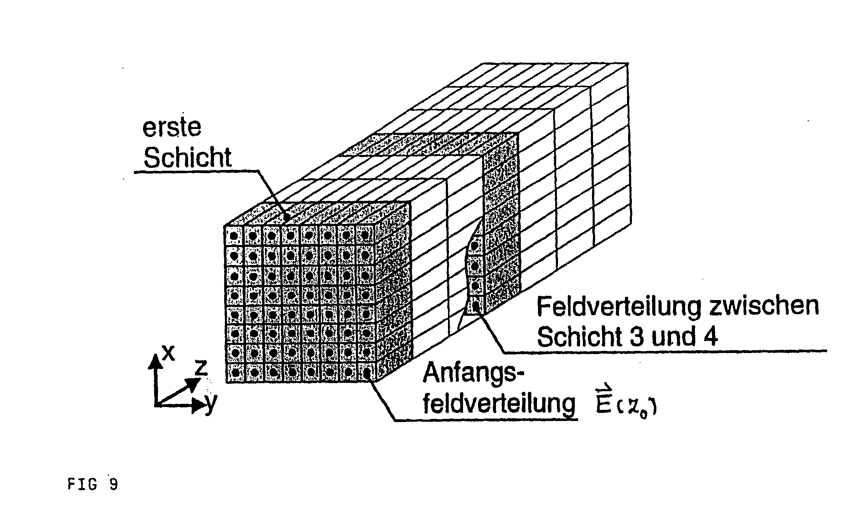

Aus der dem ausbreitungsfähigen Mode zugeordnete Anfangsfeldverteilung $\vec{E}_0(\vec{r})$ in einem den Faserkern einschließenden und vor dem Spleiß liegenden ersten Raumbereich wird die im folgenden Endfeldverteilung $\vec{E}_n(\vec{r})$ genannte Ortsabhängigkeit des elektrischen Feldes der sich vom ersten Raumbereich über den Spleiß ausbreitenden Mode innerhalb eines in Ausbreitungsrichtung hinter dem Spleiß liegenden zweiten Raumbereich mittels eines der in [9 - 11] beschriebenen Beam Propagation-Verfahren (BPM) berechnet.
Die BPM benötigt zunächst die Brechzahlverteilung an diskreten Punkten im Raum, den man beispielsweise in gleich große Quader unterteilt. Die Kantenlänge eines Quaders kann in z-Richtung beispielsweise 0,5 μm, in x- und y-Richtung jeweils 0,25 μm betragen (siehe Figur 9), wobei alle Quader mit derselben z-Koordinate einen als Schicht bezeichneten Raumbereich bilden. Jeder Quader wird als homogen bezüglich der Brechzahl angenommen, d.h. die Brechzahl ändert sich innerhalb des jeweiligen Quaders nicht.
Da man die Verteilung der Brechzahl nicht mit der für die BPM geforderten Genauigkeit aus den oben beschriebenen Messungen bestimmen kann, werden die fehlenden Datenpunkte per Interpolation (beispielsweise durch Splines) ermittelt. Dies ist auch ohne weiteres möglich, da sich die Brechzahl zwischen zwei gerade noch durch das Abbildungssystem aufgelösten Raumpunkten nur sehr wenig ändert.
Liegt das ein in der Glasfaser ausbreitungsfähige Mode beschreibende und aus der Basisverteilung $n_0(\vec{r})$ abgeleitete elektrische Feld $\vec{E}_0(x, y, z_0)$ (im folgenden $\vec{E}(z_0)$ genannt) an den Mittelpunkten der Quaderstirnflächen der ersten Schicht (symbolisiert durch schwarze Punkte in Figur 9) vor, berechnet die BPM aus dieser Anfangsfeldverteilung und den Brechzahlen der ersten Schicht das elektrische Feld $\vec{E}(x, y, z_0 + \Delta z)$ zwischen der ersten und der zweiten Schicht und daraus wieder das elektrische Feld $\vec{E}(x, y, z_0 + 2\Delta z)$ zwischen der zweiten und dritten Schicht. Führt man das Verfahren interativ fort, liefert die BPM schließlich das die Endfeldverteilung repräsentierende elektrische Feld $\vec{E}_n$ $(x, y, z_0 + n\Delta z)$ (im folgenden $\vec{E}(z_n)$ genannt) an der endseitigen Fläche der letzten Schicht.
Es existieren zahlreiche Varianten der BPM, wobei die gewünschte Genauigkeit, der erforderliche Rechenaufwand und die tolerierbare Rechenzeit die Auswahl des anzuwendenden Verfahrens bestimmt. So läßt sich der Rechenaufwand und somit die Rechenzeit bei vorgegebener Rechnerleistung verringern, indem man

- ein mit einer paaraxialen Näherung (slowly varying envelope approximation) arbeitendes Verfahren benutzt (Spleißgeometrie weicht nur unwesentlich von derjenigen der ungestörten Faser ab),
- eine skalare BPM anwendet (schwache transversale Modenkopplung) oder man
- die dreidimensionale Verteilung der Brechzahl, beispielsweise mit der Methode des effektiven Index, auf ein zweidimensionales Problem zurückführt (einfache Spleißgeometrie).

Berechnung der Spleißdämpfung

Aus der Anfangsfeldverteilung $\vec{E}(z_0)$ der Endverteilung $\vec{E}(z_n)$ bzw. den entsprechenden Intensitäten $I(z_0)$ bzw. $I(z_n)$ läßt sich die Spleißdämpfung dann durch

$$L_{[dB]} = 10 \log_{10}\left(\frac{I(z_0)}{I(z_n)}\right) \qquad (4)$$

berechnen. Die obige Formel setzt voraus, daß $E(z_n)$ eine sich auch über größere Strecken in der Faser ausbreitende Mode beschreibt. Enthält die Endfeldverteilung $\vec{E}(z_n)$ auch Beträge nicht ausbreitungsfähiger Moden, so muß $\vec{E}(z_n)$ zunächst gemäß Gleichung (4) zerlegt werden, wobei $v$ die Ordnung der höchsten noch ausbreitungsfähigen Mode und $w$ die Ordnung der höchsten in $\vec{E}(z_n)$ enthaltenen Mode bezeichnet.

$$\vec{E}(z_n) = \sum_{i=0}^{v} \vec{E}_i(z_n) + \sum_{j=v+1}^{w} \vec{E}_j(z_n) \qquad (5)$$

Demzufolge repräsentiert die Größe $\Sigma\vec{E}_i(z_n)$ die Gesamtfeldverteilung der ausbreitungsfähigen Moden und $\Sigma\vec{E}_j(z_n)$ die Gesamtfeldverteilung der nicht ausbreitungsfähigen Moden, wobei in die Berechnung der Dämpfung die nur aus $\Sigma \vec{E}_i(z_n)$ abgeleitete Intensität $I(z_n)$ eingeht.

Die Bestimmung der Endfeldverteilung aus der Anfangsfeldverteilung erfordert einen hohen Rechenaufwand, so daß es je nach Leistungsfähigkeit des im Spleißgerät eingebauten Prozessors relativ lange dauern kann, bis die Spleißdämpfung auf dem Bildschirm angezeigt wird. Dies läßt sich vermeiden, indem man die Berechnung der Endfeldverteilung nicht mehr direkt im Gerät sondern vorab beim Hersteller durchführt. Dort bestimmt man aus einer großen Anzahl aufgenommener Spleißgeometrien und den mit einem leistungsfähigen Prozessor berechneten Dämpfungswerten die für die Dämpfung relevanten Parameter. Diese Parameter müssen nicht notwendigerweise eine physikalische Entsprechung (z.B. Kernversatz usw.) haben. Verfahren zur Bestimmung solcher Parameter sind unter der Bezeichnung Hauptkomponenten oder Faktorenanalyse oder Karhunen-Loeve-Zerlegung aus der Statistik oder Physik bekannt. Der funktionale Zusammenhang der Parameter mit der berechneten Dämpfung definiert ein Kennfeld, das in jedem Spleißgerät abgespeichert wird. Die Funktion des Gerätes reduziert sich dann darauf, den erzeugten Spleiß anhand der Parameter zu klassifizieren und die zugeordnete Dämpfung aus dem Kennfeld auszulesen.

## 6. Literatur

[1] ICCS and Future- Link; Katalog 1998; Siemens-Communication-Cabel Networks; S. 107 - 116.
[2] EP 0 326 988 B1
[3] D. Marcuse "Principles of optical fiber measurements", Acad. Pr., 1981, ISBN 0-12-470980-X; S. 150 - 165
[4] H.-G. Unger, "Optische Nachrichtentechnik", Hüthig, 1993, ISBN 3-7785-2261-2; S. 648 - 671
[5] Electronic Letters, Vol. 14, No. 11, May 1978; S. 326 - 328
[6] W. Lieber, Th. Eder "Verfahren zur Ausrichtung zweier Lichtwellenleiter-Faserenden und Einrichtung zur Durchführung des Verfahrens", EP-Anm. 90109388.0, 17.05.1990
[7] Siemens Forschungs- und Entwicklungsbericht, Band 14, Nr. 3, 1985; S. 89 - 96
[8] Journal of Lightwave Technology, Vol. 12, No. 3; S. 487 - 494, March 1994
[9] IEEE Photonics Technology Letters, Vol. 4, No. 2, S. 148 - 151, February 1992
[10] Journal of Lightwave Technology, Vol. 10, No. 3; S. 295 - 305, March 1992
[11] IEEE Photonics Technology Letters, Vol. 5, No. 9; S. 1073 - 1076, September 1993

## Patentansprüche

1. Verfahren zur Bestimmung der Dämpfung eines zwei optische Wellenleiter verbindenden Spleißes durch Ausführen der folgenden Schritte:

a) Bestimmung oder Vorgabe einer ersten räumlichen Verteilung der Brechzahl ($n_0(\vec{r})$) innerhalb eines nicht durch den Spleiß beeinflußten ersten Raumbereichs eines ersten optischen Wellenleiters,
b) Bestimmung einer zweiten räumlichen Verteilung ($n(\vec{r})$) der Brechzahl im Bereich des Spleißes,
c) Ableitung einer ersten Feldfunktion ($\vec{E}(z_0)$) aus der ersten räumlichen Verteilung ($n_0(\vec{r})$) der Brechzahl, wobei die erste Feldfunktion ($\vec{E}(z_0)$) die Ortsabhängigkeit des elektrischen Feldes einer in den Wellenleitern ausbreitungsfähigen Mode beschreibt.
d) Berechnung einer zweiten Feldfunktion ($\vec{E}(z_n)$) aus der ersten Feldfunktion ($\vec{E}(z_0)$) und der zweiten räumlichen Verteilung der Brechzahl ($n(\vec{r})$), wobei die zweite Feldfunktion ($\vec{E}(z_n)$) die Ortsabhängigkeit des elektrischen Feldes, die sich vom ersten Raumbereich über den Spleiß ausbreitenden Modes innerhalb eines nicht durch den Spleiß beeinflußten zweiten Raumbereichs des zweiten optischen Wellenleiters beschreibt,
e) Berechnung einer ersten Intensität ($I(z_0)$) und einer zweiten Intensität ($I(z_n)$) aus den zugeordneten Feldfunktionen ($\vec{E}(z_0)$, $\vec{E}(z_n)$), und
f) Berechnung der vom Verhältnis der beiden Intensitäten ($I(z_0)$, $I(z_n)$) abhängigen Dämpfung (L) des Spleißes.

2. Verfahren nach Anspruch 1,

**dadurch gekennzeichnet,**
**daß** die Dämpfung (L) des Spleißes gemäß der Beziehung

$$L_{[dB]} = 10\log_{10}\left(\frac{I(z_0)}{I(z_n)}\right)$$

berechnet wird.

3. Verfahren nach Anspruch 1 oder 2,
   **dadurch gekennzeichnet,**
   **daß** die zweite räumliche Verteilung ($n(\vec{r})$) der Brechzahl durch transversale Bestrahlung des Spleißes mit Licht und Auswertung der in Strahlrichtung hinter dem Spleiß erzeugten Intensitätsverteilung oder des Schattenbildes bestimmt wird.

4. Verfahren nach Anspruch 3,
   **dadurch gekennzeichnet,**
   **daß** die Wellenleiter und der Spleiß aus zwei, einen Winkel $\alpha \neq 180°$ einschließenden Richtungen durchleuchtet werden, und daß die transmittierte Strahlung jeweils mittels einer Optik (13, 14) auf eine eine Ebene definierendes Sensor- oder Detektorelement (16, 17) abgebildet werden.

5. Verfahren nach Anspruch 4,
   **dadurch gekennzeichnet,**
   **daß** die jeweils durch das Sensor- oder Detektorelement (16, 17) definierten Ebenen einen Winkel von annähernd 90° einschließen.

6. Verfahren nach einem der Ansprüche 3 bis 5,
   **dadurch gekennzeichnet,**
   **daß** ein Versatz des Mittelpunktes des lichtführenden Kerns der Wellenleiter im Bereich des Spleißes zumindest in einer ersten Raumrichtung aus dem Schattenbild bestimmt wird, daß die erste räumliche Verteilung der Brechzahl entsprechend dem Versatz des lichtführenden Kerns in der entsprechenden Raumrichtung verschoben wird und daß die modifizierte erste räumliche Verteilung der Brechzahl die zweite räumliche Verteilung der Brechzahl repräsentiert.

7. Verfahren nach Anspruch 6,
   **dadurch gekennzeichnet,**
   **daß** der Versatz des lichtführenden Kerns aus dem Versatz der Mittellinie der Außenkontur der Wellenleiter im Bereich des Spleißes abgeleitet wird.

8. Verfahren nach einem der Ansprüche 3 bis 5,
   **dadurch gekennzeichnet,**
   **daß** eine Verjüngung oder Aufweitung des lichtführenden Kerns der Wellenleiter im Bereich des Spleißes zumindest in einer ersten Raumrichtung aus dem Schattenbild bestimmt wird, daß die erste räumliche Verteilung der Brechzahl in der entsprechenden Raumrichtung mit einer dem Verhältnis $[d_{x/y}(z)]/[d_{x/y}(z_0)]$ proportionalen Faktor gestaucht oder gestreckt wird, wobei $d_{x/y}(z_0)$ die Breite des Kerns an einer nicht durch den Spleiß beeinflußten Stelle $z_0$ der Wellenleiter und $d_{x/y}(z)$ die Breite des Kerns an einer im Bereich des Spleißes liegenden Stelle $z$ bezeichnen und daß die entsprechend gestauchte oder gedehnte erste räumliche Verteilung der Brechzahl die zweite räumliche Verteilung der Brechzahl repräsentiert.

9. Verfahren nach Anspruch 8,
   **dadurch gekennzeichnet,**
   **daß** die Verjüngung oder Aufweitung oder des lichtführenden Kerns aus der Verjüngung bzw. Aufweitung der Außenkontur der Wellenleiter im Bereich des Spleißes abgeleitet wird.

10. Verfahren nach einem der Ansprüche 3 bis 5,
    **dadurch gekennzeichnet,**
    **daß** die Helligkeit eines den lichtleitenden Kern vom Mantel des Wellenleiters abgrenzenden Randes des in zumindest einer der beiden Schattenbilder im Bereich des Spleißes und in einem nicht vom Spleiß beeinflußten zweiten Bereich gemessen werden, daß die erste räumliche Verteilung der Brechzahl gemäß einem von den gemessenen Helligkeiten abhängigen Faktor räumlich modifiziert wird, und daß die modifizierte erste räumliche Verteilung der Brechzahl die zweite räumliche Verteilung der Brechzahl repräsentiert.

**Claims**

1. A method for determining the loss of a splice connecting two optical waveguides by executing the following steps:

   a) determining or describing a first spatial distribution of the refractive index ($n_0(\bar{r})$) inside a first spatial region, not influenced by the splice, of a first optical waveguide,
   b) determining a second spatial distribution ($n(\bar{r})$) of the refractive index in the region of the splice,
   c) deriving a first field function ($\bar{E}(z_0)$) from the first spatial distribution ($n_0(\bar{r})$) of the refractive index, the first field function ($\bar{E}(z_0)$) describing the spatial dependence of the electric field of a mode that can propagate in the waveguides,
   d) calculating a second field function ($\bar{E}(z_n)$) from the first field function ($\bar{E}(z_0)$) and the second spatial distribution of the refractive index ($n(\bar{r})$), the second field function ($\bar{E}(z_n)$) describing the spatial dependence of the electric field, the mode propagating from the first spatial region via the splice, within a second spatial region, not influenced by the splice, of the second optical waveguide,
   e) calculating a first intensity ($I(z_0)$) and a second intensity ($I(z_n)$) from the assigned field functions ($\bar{E}(z_0)$, $\bar{E}(z_n)$), and
   f) calculating the loss (L) of the splice occurring as a function of the ratio of the two intensities ($I(z_0)$, $I(z_n)$).

2. The method as claimed in claim 1, **characterized in that** the loss (L) of the splice is calculated in accordance with the relationship

$$L_{[dB]} = 10\log_{10}\left(\frac{I(z_0)}{I(z_n)}\right)$$

3. The method as claimed in claim 1 or 2, **characterized in that** the second spatial distribution ($n(\bar{r})$) of the refractive index is determined by transverse irradiation of the splice with light and evaluation of the intensity distribution generated downstream of the splice in the beam direction, or of the shadow image.

4. The method as claimed in claim 3, **characterized in that** the waveguides and the splice are transilluminated from two directions enclosing an angle of $\alpha \neq 180°$, and **in that** the transmitted radiation is projected in each case by means of an optical system (13, 14) onto a sensor or detector element (16, 17) defining a plane.

5. The method as claimed in claim 4, **characterized in that** the planes respectively defined by the sensor or detector element (16, 17) enclose an angle of approximately 90°.

6. The method as claimed in one of claims 3 to 5,
   **characterized in that** an offset of the center of the light-guiding core of the waveguides in the region of the splice is determined at least in a first spatial direction from the shadow image, **in that** the first spatial distribution of the refractive index corresponding to the offset of the light-guiding core is displaced in the corresponding spatial direction, and **in that** the modified first spatial distribution of the refractive index represents the second spatial distribution of the refractive index.

7. The method as claimed in claim 6, **characterized in that** the offset of the light-guiding core is derived from the offset of the center line of the outer contour of the waveguides in the region of the splice.

8. The method as claimed in one of claims 3 to 5,
   **characterized in that** a tapering or expansion of the light-guiding core of the waveguides in the region of the splice is determined at least in a first spatial direction from the shadow image, **in that** the first spatial distribution of the refractive index is compressed or stretched in the corresponding spatial direction by a factor proportional to the ratio $[d_{x/y}(z)]/[d_{x/y}(z_0)]$, $d_{x/y}(z_0)$ denoting the width of the core at a point $z_0$, not influenced by the splice, of the waveguides, and $d_{x/y}(z)$ denoting the width of the core at a point z lying in the region of the splice, and **in that** the correspondingly compressed or elongated first spatial distribution of the refractive index represents the second spatial distribution of the refractive index.

9. The method as claimed in claim 8, **characterized in that** the tapering or expansion or of the light-guiding core is derived respectively from the tapering or expansion of the outer contour of the waveguides in the region of the splice.

10. The method as claimed in one of claims 3 to 5, **characterized in that** the brightness of an edge delimiting the light-guiding core of the cladding of the waveguide is of the measured in at least one of the two shadow images in the region of the splice and in a second region not influenced by the splice, **in that** the first spatial distribution of the refractive index is spatially modified in accordance with a factor dependent on the measured brightnesses, and **in that** the modified first spatial distribution of the refractive index represents the second spatial distribution of the refractive index.

**Revendications**

1. Procédé de détermination de l'atténuation d'une épissure raccordant deux guides d'ondes optiques en mettant en oeuvre les étapes suivantes :

   a) détermination ou spécification d'une première répartition spatiale de l'indice de réfraction $(n_0(\vec{r}))$ à l'intérieur d'une première zone spatiale non influencée par l'épissure d'un premier guide d'ondes optique,
   b) détermination d'une deuxième répartition spatiale $(n(\vec{r}))$ de l'indice de réfraction dans la zone de l'épissure,
   c) déduction d'une première fonction de champ $(\vec{E}(z_0))$ à partir de la première répartition spatiale $(n_0(\vec{r}))$ de l'indice de réfraction, la première fonction de champ $(\vec{E}(z_0))$ décrivant la dépendance locale du champ électrique d'un mode de propagation dans les guides d'ondes,
   d) calcul d'une deuxième fonction de champ $(\vec{E}(Z_n))$ à partir de la première fonction de champ $(\vec{E}(z_0))$ et de la deuxième répartition spatiale de l'indice de réfraction $(n(\vec{r}))$, la deuxième fonction de champ $(\vec{E}(z_n))$ décrivant la dépendance locale du champ électrique du mode se propageant à partir de la première zone spatiale par l'intermédiaire de l'épissure à l'intérieur d'une deuxième zone spatiale non influencée par l'épissure du deuxième guide d'ondes optique,
   e) calcul d'une première intensité $(I(z_0))$ et d'une deuxième intensité $(I(z_n))$ à partir des fonctions de champ associées $(\vec{E}(z_0), \vec{E}(z_n))$, et
   f) calcul de l'atténuation (L) de l'épissure dépendant du rapport entre les deux intensités $(I(z_0), I(z_n))$.

2. Procédé selon la revendication 1, **caractérisé en ce que** l'atténuation (L) de l'épissure est calculée en utilisant la formule

$$L_{[dB]} = 10 \log_{10}\left(\frac{I(z_0)}{I(z_n)}\right)$$

3. Procédé selon la revendication 1 ou 2, **caractérisé en ce que** la deuxième répartition spatiale $(n(\vec{r}))$ de l'indice de réfraction est déterminée par irradiation transversale de l'épissure avec de la lumière et l'évaluation de la répartition de l'intensité produite derrière l'épissure dans le sens du rayonnement, ou évaluation de la silhouette.

4. Procédé selon la revendication 3, **caractérisé en ce que** les guides d'ondes et l'épissure sont traversés par la lumière provenant de deux directions faisant intervenir un angle $\alpha \neq 180°$, et **en ce que** le rayonnement transmis est reproduit au moyen d'une optique (13, 14) sur un élément capteur ou détecteur (16, 17) définissant un plan.

5. Procédé selon la revendication 4, **caractérisé en ce que** chaque plan défini par l'élément capteur ou détecteur (16, 17) fait intervenir un angle d'environ 90°.

**6.** Procédé selon l'une quelconque des revendications 3 à 5, **caractérisé en ce qu'**un décalage du centre du coeur du guide d'ondes guidant la lumière est défini dans la zone de l'épissure dans une première direction spatiale à partir de la silhouette, **en ce que** la première répartition spatiale de l'indice de réfraction est déplacée en fonction du décalage du coeur guidant la lumière dans la direction spatiale correspondante, et **en ce que** la première répartition spatiale de l'indice de réfraction modifiée représente la deuxième répartition spatiale de l'indice de réfraction.

**7.** Procédé selon la revendication 6, **caractérisé en ce que** le décalage du coeur guidant la lumière est déduit du décalage de la ligne médiane par rapport au contour extérieur du guide d'ondes dans la zone de l'épissure.

**8.** Procédé selon l'une quelconque des revendications 3 à 5, **caractérisé en ce qu'**un amincissement ou un élargissement du coeur du guide d'ondes guidant la lumière est défini dans la zone de l'épissure dans au moins une direction spatiale à partir de la silhouette, **en ce que** la première répartition spatiale de l'indice de réfraction est écrasée ou étendue dans une direction spatiale correspondante selon un facteur proportionnel au rapport $[(d_{x/y}(z)] / [d_{x/y}(z_0)]$, $d_{x/y}(z_0)$ désignant la largeur du coeur en en point $z_0$ du guide d'ondes non influencé par l'épissure et $d_{x/y}(z)$ désignant la largeur du coeur en un point $z$ se trouvant dans la zone de l'épissure, et **en ce que** la première répartition spatiale de l'indice de réfraction écrasée ou allongée en conséquence représente la deuxième répartition spatiale de l'indice de réfraction.

**9.** Procédé selon la revendication 8, **caractérisé en ce que** l'amincissement ou l'élargissement du coeur guidant la lumière est déduite de l'amincissement et/ou de l'élargissement du contour extérieur des guides d'ondes dans la zone de l'épissure.

**10.** Procédé selon l'une quelconque des revendications 3 à 5, **caractérisé en ce que** la luminosité d'un bord délimitant le coeur guidant la lumière par rapport à la gaine du guide d'ondes est mesurée dans au moins une des deux silhouettes dans la zone de l'épissure et dans une deuxième zone non influencée par l'épissure, **en ce que** la première répartition spatiale de l'indice de réfraction est modifiée selon un facteur dépendant des luminosités mesurées, et **en ce que** la première répartition spatiale de l'indice de réfraction modifiée représente la deuxième répartition spatiale de l'indice de réfraction.

FIG 1

FIG 2A

Außenkontur

$\delta_K$

C1

2

1

C2

Faserkern

FIG 2B

$\delta_C$

C1

C2

1

2

FIG 2C

$\delta_C$

C1

C2

1

2

FIG 3

FIG 4

FIG 5

$n(x) \uparrow n(y)$

$x/y$

Mantel     Kern     Mantel

$x_m / y_m$

Kernposition

$z_s$

$z$

$x/y$

Brechzahlverteilung

$z$

25

1'

21''

22'

Z

EP 1 192 491 B1

FIG 6

FIG 7

FIG 8

erste Schicht

Feldverteilung zwischen Schicht 3 und 4

Anfangsfeldverteilung $\vec{E}(z_0)$

FIG 9

EP 1 192 491 B1